# EUROPÄISCHE PATENTSCHRIFT

(11) **EP 2 102 102 B1**
(45) Veröffentlichungstag und Bekanntmachung des Hinweises auf die Patenterteilung: **06.04.2016**
(21) Anmeldenummer: 07847572.0
(22) Anmeldetag: 30.11.2007
(51) Int. Cl.: C01B 21/14, C01B 21/24, B01D 53/56

(54) **VERFAHREN ZUR ENTFERNUNG VON NO UND N2O AUS GASGEMISCHEN**
METHOD FOR REMOVING NO AND N<SB>2</SB>O FROM GAS MIXTURES
PROCÉDÉ POUR ÉLIMINER DU NO ET DU N<SB>2</SB>O DE MÉLANGES GAZEUX

(30) Priorität: 04.12.2006 EP 06125297
(43) Veröffentlichungstag der Anmeldung: 23.09.2009
(73) Patentinhaber: BASF SE, 67056 Ludwigshafen am Rhein (DE)
(72) Erfinder: OOST, Carsten, 67098 Bad Dürkheim (DE); ROHDE, Wolfgang, 67346 Speyer (DE); MILLER, Christian, 67146 Deidesheim (DE); STROEZEL, Manfred, 68549 Ilvesheim (DE); THOME, Alfred, 67346 Speyer (DE); BERNING, Wilfried, 67549 Worms (DE)
(74) Vertreter: BASF IP Association
(86) Internationale Anmeldenummer: PCT/EP2007/063056
(87) Internationale Veröffentlichungsnummer: WO 2008/068194

(56) Entgegenhaltungen:
- EP-A- 0 059 445
- WO-A-93/08121
- WO-A-2007/038581
- DE-A1- 10 050 906
- DE-A1- 19 533 715

## Beschreibung

Die Erfindung betrifft ein Verfahren zur Aufarbeitung des Abgases aus einer Anlage zur Herstellung von Hydroxylamin oder Hydroxylammonium-Salzen durch katalytische Reduktion von Stickstoffmonoxid mit Wasserstoff zwecks Verwertung zumindest eines Teils des im Abgas enthaltenen Stickstoffmonoxids und gegebenenfalls Wasserstoff zur Herstellung von Hydroxylamin oder Hydroxylammonium-Salzen.

Bei der Herstellung von Hydroxylamin oder Hydroxylammonium-Salzen durch katalytische Hydrierung von Stickstoffmonoxid mit Wasserstoff entsteht als Nebenprodukt unter anderem Distickstoffmonoxid. Hierbei wird Wasserstoff in großem Überschuss eingesetzt und das Stickstoffmonoxid nur teilweise umgesetzt. Man erhält Abgase, die Wasserstoff, Stickstoffmonoxid, Distickstoffmonoxid und Inerte enthalten. Diese Gemische können nicht unmittelbar in die Synthese rezykliert werden, da es sonst zur Aufpegelung des Distickstoffmonoxids und Bildung von explosionsfähigen Gemischen aus Wasserstoff, Stickstoffmonoxid und Distickstoffmonoxid käme. Darüber hinaus enthält das Abgas der Hydroxylammoniumsynthese Stickstoff, der sich bei einer Rückführung in den Prozess ebenfalls aufpegeln und zu einer erheblichen Verringerung der Raum-Zeitausbeute führen würde. Das Abgas wird daher üblicherweise verbrannt, wobei die dabei freiwerdende Energie zur Dampferzeugung genutzt werden kann. Wirtschaftlich günstiger wäre es jedoch, die im Abgas enthaltenen Wertstoffe, insbesondere Stickstoffmonoxid und gegebenenfalls auch Wasserstoff und Distickstoffmonoxid zu isolieren und gegebenenfalls in den Prozess zu Rezyklieren. Hierbei darf jedoch insbesondere das Distickstoffmonoxid, das im Verfahren der Herstellung von Hydroxylamin inert ist und sich somit aufpegelt, nicht mit rezykliert werden, da es, wie oben beschrieben, zu zündfähigen Gemischen führt. Darüber hinaus soll auch eine Aufpegelung des Stickstoffs vermieden werden, wegen der oben beschriebenen erheblichen Verringerung der Raum-Zeitausbeute.

Es wurden daher eine Reihe von Verfahren vorgeschlagen, bei denen das Distickstoffmonoxid aus dem Wasserstoff, Stickstoffmonoxid, Distickstoffmonoxid und Inerten enthaltenden Abgas der Hydroxylaminsynthese von den übrigen Komponenten desselben abgetrennt wird.

Hierfür wird beispielsweise in DE-A 032 44 370 eine Druckwechseladsorption an Molekularsieben vorgeschlagen. Nachteilig an diesem Verfahren ist, dass das Gasgemisch die aggressive Komponente Stickstoffmonoxid enthält, die ein freies Radikal ist und das Absorptionsmaterial schnell angreift, so dass ein häufiger Austausch desselben erforderlich ist. Darüber hinaus ist die Vermeidung von explosiven Gasgemischen mit hohen Investitionskosten verbunden.

Die WO-A 02/30549 beschreibt ein weiteres Verfahren zur Abtrennung von Distickstoffmonoxid aus dem Abgas der Herstellung von Hydroxylamin, und zwar durch Einsatz von semipermeablen Membranen. Auch in diesem Verfahren bewirkt die Aggressivität des Stickstoffmonoxids eine begrenzte Stabilität der Membranen und somit eine begrenzte Wirtschaftlichkeit des Verfahrens.

Im Verfahren der EP-A 0 919 278 wird vorgeschlagen, das Abgas aus der Hydroxylaminsynthese an geeigneten Edelmetallkatalysatoren zu Ammoniak zu reduzieren. Der gebildete Ammoniak kann dann in die Herstellung von Stickstoffmonoxid, dem Edukt der Hydroxylaminsynthese, geleitet werden, während der Wasserstoff unmittelbar in die Hydroxylaminsynthese rezykliert werden kann. Nachteilig an dem Verfahren ist aber, dass trotz hoher Umsätze und vollständiger Abtrennung der Stickoxide die Ammoniakselektivität verhältnismäßig gering ist, von beispielhaft 46 % für Distickstoffmonoxid beziehungsweise 67 % für Stickstoffmonoxid, so dass ein erheblicher Teil der Stickoxide ungenutzt verloren geht. Darüber hinaus besteht die Gefahr der Bildung von explosionsfähigem Ammoniumnitrat sowie der Aufpegelung von Nebenkomponenten, insbesondere Methan und Kohlenmonoxid, die zu einer Vergiftung des Katalysators der Hydroxylaminsynthese führen können.

Ein weiteres Verfahren zur Entfernung von Stickstoffoxiden aus einem Gasstrom ist in DE 195 33 715 A1 offenbart.

Es war demgegenüber Aufgabe der Erfindung, ein wirtschaftliches Verfahren zur Aufarbeitung des Abgases aus einer Anlage zur Herstellung von Hydroxylamin oder Hydroxylammonium-Salzen durch katalytische Reduzierung von Stickstoffmonoxid mit Wasserstoff zwecks Wiederverwertung zumindest eines Teils des im Abgas enthaltenen Stickstoffmonoxids und gegebenenfalls Wasserstoffs zur Verfügung zu stellen.

Die Aufgabe wird gelöst durch ein Verfahren zur Aufarbeitung des Abgases aus einer Anlage zur Herstellung von Hydroxylamin oder Hydroxylammonium-Salzen durch katalytische Reduktion von Stickstoffmonoxid mit Wasserstoff zwecks Verwertung zumindest eines Teils des im Abgas enthaltenen Stickstoffmonoxids und gegebenenfalls Wasserstoffs durch Rezyklieren in die Anlage zur Herstellung von Hydroxylamin oder Hydroxylammonium-Salzen, das dadurch gekennzeichnet ist, dass aus dem Abgas der Anlage zur Herstellung von Hydroxylamin oder Hydroxylammonium-Salzen in einer ersten Trennstufe Stickstoffmonoxid selektiv abgetrennt wird.

Bevorzugt erfolgt die Verwertung zumindest eines Teils des im Abgas enthaltenen Stickstoffmonoxids und gegebenenfalls Wasserstoff durch Rezyklieren in die Anlage zur Herstellung von Hydroxylamin oder Hydroxylammonium-Salzen.

Es wurde somit gefunden, dass es wesentlich ist, das Abgas einer Hydroxylaminsynthese zwecks Wiederverwertung zumindest eines Teils des darin enthaltenen Stickstoffmonoxids und gegebenenfalls Wasserstoffs in einer ersten Trennstufe einer selektiven Abtrennung von Stickstoffmonoxid zuzuführen.

Die katalytische Reduzierung von Stickstoffmonoxid durch Wasserstoff wird in der Regel bei 30 bis 60 °C unter Mitverwendung von starken Mineralsäuren, insbesondere Schwefelsäure oder Phosphorsäure, gegebenenfalls unter Zusatz von Salzen, insbesondere Ammoniumsalzen der vorgenannten Säuren, durchgeführt. In der Regel geht man von vier bis sechs normalen wässrigen Säuren aus. Als Katalysatoren können suspendierte Edelmetallkatalysatoren, insbesondere Platinträgerkatalysatoren, verwendet werden, wobei sich als Träger insbesondere Graphit als vorteilhaft erwiesen hat. Aktivität und Selektivität des Katalysators können durch die Behandlung mit organischen oder anorganischen Verbindungen, insbesondere schwefelhaltigen Verbindungen, eingestellt werden. Ein derartiges Verfahren ist beispielsweise aus DE-C 11 77 118 bekannt.

Die Umsetzung wird unter großem Wasserstoffüberschuss durchgeführt und das Stickstoffmonoxid nur partiell umgesetzt. Man erhält ein Abgas, dessen Zusammensetzung typischerweise, in Vol.-%, 50 bis 90 % Wasserstoff, 0,5 bis 25 % Stickstoffmonoxid, 0,5 bis 15 % Distickstoffmonoxid, 0 bis 20 % Stickstoff und 0 bis 18 % Wasser enthält.

Erfindungsgemäß wird Stickstoffmonoxid zwingend in einer ersten Trennstufe aus dem Abgas abgetrennt. Dadurch wird gewährleistet, dass es in den nachfolgenden Trennstufen die eingesetzten Materialien nicht angreifen kann, sowie auch, dass das Stickstoffmonoxid aus dem Abgas nahezu vollständig zur Erzeugung von Hydroxylamin genutzt werden kann, wobei vermieden wird, dass es in nachfolgenden Trennstufen teilweise verloren geht.

In einer besonders bevorzugten Verfahrensvariante kann die selektive Abtrennung des Stickstoffmonoxids in einem Reaktor zur Herstellung von Hydroxylamin oder Hydroxylammoniumsulfat erfolgen, der auf Vollumsatz des Stickstoffmonoxids ausgelegt ist. Insbesondere kann das Stickstoffmonoxid auf diese Weise in einem dem Hauptreaktor der Hydroxylaminsynthese nachfolgenden separaten Reaktor abgetrennt werden. Dabei kann die auf die Hydroxylamin oder Hydroxylammoniumsulfat bezogene Raumzeitausbeute dieses Reaktors 30 bis 60 % unterhalb der Raumzeitausbeute des Hauptreaktors liegen.

In einer weiteren Ausführungsvariante kann die selektive Abtrennung des Stickstoffmonoxids in der ersten Trennstufe durch Absorption an einem geeigneten Absorbens durchgeführt werden.

Geeignete Absorbentien sind insbesondere Übergangsmetall-haltige feste oder flüssige Materialien, die Stickstoffmonoxid reversibel als Nitrosylkomplex binden. Beispielsweise bildet Eisensulfat in wässriger Lösung Nitrosylkomplexe, die sich bei erhöhter Temperatur wieder in die Ausgangsverbindungen zurückspalten lassen.

Darüber hinaus können auch Übergangsmetall-haltige festphasige Absorbentien, beispielsweise Übergangsmetall-ausgetauschte Zeolithe, eingesetzt werden.

Aus dem Restgas, das nach der Abtrennung von Stickstoffmonoxid in der ersten Trennstufe verbleibt, kann in einer zweiten Trennstufe das Distickstoffmonoxid selektiv abgetrennt werden. Hierfür können physikalische Verfahren eingesetzt werden, die auf unterschiedlichen Absorptionseigenschaften der Gase beruhen, insbesondere die Druckwechselabsorption an flüssigen oder festen Absorbentien, darüber hinaus Membranverfahren oder die Tieftemperaturzerlegung. Dabei kann das Distickstoffmonoxid als Werststoff isoliert werden.

Als chemische Verfahren kommen insbesondere die Umsetzung zu Ammoniak oder zu Stickstoff und Wasser in Frage.

In einer Ausführungsform wird Distickstoffmonoxid in der zweiten Trennstufe selektiv zu Ammoniak an geeigneten Katalysatoren umgesetzt, beispielsweise entsprechend dem eingangs dargelegten Verfahren der EP-A 0 919 278 oder auch an Nickel beziehungsweise Kobalt enthaltenden Zeolithkatalysatoren, wie sie in der JP-A 54136598 beschrieben sind. Der durch Umsetzung von Distickstoffmonoxid erhaltene Ammoniak kann bevorzugt einem Ammoniakverbrennungsofen zur Herstellung von Stickstoffmonoxid zugeführt werden.

In einer weiteren Ausführungsvariante wird das Distickstoffmonoxid in der zweiten Trennstufe mit Wasserstoff selektiv zu Stickstoff und Wasser reduziert. Dies ist entweder auf thermischem Wege, bei hoher Temperatur von oberhalb 500 °C möglich, oder auch katalytisch.

Für die katalytische Reduzierung des Distickstoffmonoxids zu Stickstoff und Wasser eignen sich verschiedenartige Übergangsmetallkatalysatoren, die metallische, oxidische oder Mischungen von metallischen und oxidischen Komponenten enthalten. Geeignete Katalysatoren basieren beispielsweise auf Platin-, Palladium-, Silber- oder auch Goldpartikeln, die auf einem Trägermaterial abgeschieden sind. Weiterhin eignen sich Übergangsmetall-dotierte Zeolithe oder auch Übergangsmetall-freie Zeolithe, darüber hinaus Katalysatoren auf der Basis von Kupfer-Zink-Aluminium-Spinellen und anderen Kupferoxiden oder Eisenoxid auf Titandioxid. Besonders geeignete Katalysatoren basieren auf den Edelmetallen Platin, Palladium und/oder Silber sowie auf Kupferoxid-haltigen Zubereitungen. Bevorzugt werden Katalysatoren enthaltend als Aktivkomponenten eines oder mehrere der Metalle Silber, Palladium, Platin oder Kupfer oder eine oder mehrere Verbindungen dieser Metalle, vorteilhaft auf Aluminiumoxid-haltigen Trägermaterialien, insbesondere solche Katalysatoren, deren Zündtemperatur unterhalb von 100 °C liegt.

Zur Vermeidung des Eintrags von Katalysatorgiften, insbesondere Schwefelsäure, aus der Hydroxylaminsynthese in das Katalysatorbett zur katalytischen Reduzierung von Distickstoffmonoxid kann der Distickstoffmonoxid enthaltende Abgasstrom vor Eintritt in das Katalysatorbett durch einen Absorberturm oder durch einen Gaswäscher geleitet werden. Das aus dem Katalysatorbett zur katalytischen Reduzierung von Distickstoffmonoxid austretende Gas kann geringe Mengen Ammoniak enthalten, der in einer Nebenreaktion gebildet werden kann. Dieser Ammoniak kann z.B. ebenfalls in einem Absorberturm oder Gaswäscher abgetrennt werden. Der Ammoniak kann aber auch, zumindest teilweise, aus dem Abgas der katalytischen Reduktion von Distickstoffmonoxid als wässrige ammoniakalische Lösung durch Kondensation abgetrennt werden. Darüber hinaus ist es auch möglich, aus dem Abgasstrom der katalytischen Reduktion von Distickstoffmonoxid zunächst das Wasser durch Kondensation oder Absorption abzutrennen und anschließend den Ammoniak in reiner Form zu gewinnen.

Da das Abgas der Hydroxylaminanlage in der Regel auch inerten Stickstoff enthält, beziehungsweise dieser bei den chemischen Verfahren der zweiten Trennstufe zusätzlich gebildet werden kann, kann es vorteilhaft sein, das Restgas der zweiten Trennstufe in einer dritten Trennstufe einer Abtrennung von Wasserstoff von Stickstoff sowie anderen im Verfahren zur Herstellung von Hydroxylamin inerten Komponenten zu unterziehen. Hierfür sind insbesondere Membranverfahren geeignet.

Gegenstand der Erfindung ist auch ein Verfahren zur Herstellung von Hydroxylamin oder Hydroxylammonium-Salzen, wonach das Abgas aus der Hydroxylamin- oder Hydroxylammonium-Salzsynthese nach einem der vorstehend beschriebenen Verfahren aufbereitet wird, insbesondere dass einer der in der Aufbereitung des Abgases gewonnenen Wertstoffe Stickstoffmonoxid und Wasserstoff zur Herstellung von Hydroxylamin oder Hydroxylammonium-Salzen genutzt wird. Bevorzugt wird ein Verfahren, bei dem mindestens einer der in der Aufbereitung des Abgases gewonnenen Wertstoffe Stickstoffmonoxid und Wasserstoff in den Hydroxylaminsynthese-Prozess zurückgeführt wird.

Der Vergleich der Einsatzzahlen für Stickstoffmonoxid und Wasserstoff für ein Verfahren zur Herstellung von Hydroxylamin ohne Rückgewinnung zeigt, dass pro Tonne Hydroxylamin 1420 Nm³ Wasserstoff und 800 Nm³ Stickstoffmonoxid erforderlich sind, jedoch mit erfindungsgemäßer Abtrennung von Stickstoffmonoxid und Wasserstoff unter Rezyklierung in die Hydroxylaminanlage lediglich 1146 Nm³ Wasserstoff und 692 Nm³ Stickstoffmonoxid erforderlich sind.

Die Erfindung wird im Folgenden anhand von Ausführungsbeispielen näher erläutert.

### Beispiel 1

Selektive Abtrennung von Stickstoffmonoxid in einem Reaktor zur Synthese von Hydroxylammoniumsulfat

In einem 50-m³-Rührkessel wurden kontinuierlich 32 m³/h einer Suspension aus 30 g/l Katalysator (0,5 % Pt auf Graphit) in Schwefelsäure (16,6 Gew.-%) gepumpt. Der Flüssigkeitsstand im Rührkessel betrug ca. 75 %. Die Flüssigkeit im Rührkessel wurde bei 39,2 °C mit 1100 Nm³/h Abgas aus einer Hydroxylaminanlage, bestehend aus 73,9 Vol.-% H₂, 18,0 Vol.-% NO, 3,8 Vol.-% N₂O und 4,3 Vol.-% N₂ begast. Hierbei wurde das NO nahezu vollständig zu Hydroxylammoniumsulfat umgesetzt. 450 Nm³/h Abgas bestehend aus 84,4 Vol.-% H₂, 0,1 Vol.-% NO, 6,8 Vol.-% N₂O und 8,7 Vol.-% N₂ verließen den Rührkessel. Der Umsatz bezogen NO betrug 99,8 %.

### 2. Trennstufe:

### Katalytische Reduzierung von Distickstoffmonoxid zu Stickstoff und Wasser

In einem Rohrreaktor (Ø 25 mm) wurde eine Mischung aus 20 ml Quarzglassplitt und 20 ml Katalysatorsplitt gefüllt. Die Temperatur des Betts wurde am Eingang und in der Bettmitte gemessen. Der in das Katalysatorbett eingeleitete Abgasstrom aus einer Hydroxylaminsynthese bestehend aus 73,3 Vol.-% H₂, 8,9 Vol.-% N₂O, 5,6 Vol.-% Wasser und 12,2 N₂ wurde mittels einer Vorheizstrecke stufenweise temperiert, der Volumenstrom betrug 200 Nl/h. Es wurden auf Al₂O₃ geträgerte Ag-haltige Katalysatoren mit unterschiedlichem Ag-Gehalt hinsichtlich ihres Zündverhaltens untersucht. Die Katalysatoren wurden durch Tränkung eines γ-Al₂O₃-Trägers (Porenvolumen 0,7 ml/g, spez. Oberfläche 200 m²/g) mit wässriger Silbernitratlösung und anschließender Kalzination bei 700 °C hergestellt. Die nachfolgende Tabelle 1 fasst die Temperaturen der Bettmitte, bei der 50 % Umsatz und bei der Vollumsatz erreicht werden, zusammen:

**Tabelle 1:**

| **Katalysator** | **T (50 %) [°C]** | **T (100 %) [°C]** |
|---|---|---|
| | | |
| 14 % Ag auf Al₂O₃ | 82 | 158 |
| 5 % Ag auf Al₂O₃ | 82 | 155 |
| 1 % Ag auf Al₂O₃ | 134 | 214 |
| 0,1 % Ag auf Al₂O₃ | 233 | 340 |

### Beispiel 2

### 2. Trennstufe:

### Katalytische Reduzierung von Distickstoffmonoxid zu Stickstoff und Wasser

In einem Rohrreaktor (0 25 mm) wurde eine Mischung aus 30 ml Quarzglassplitt und 10 ml Katalysatorsplitt gefüllt. Die Temperatur des Betts wurde am Eingang und in der Bettmitte gemessen. Der in das Katalysatorbett eingeleitete Gasstrom wurde mittels einer Vorheizstrecke stufenweise temperiert, der gesamte Volumenstrom betrug 100 Nl/h. Zunächst wurde ein Gasgemisch folgender Zusammensetzung eingeleitet: 73,4 Vol.-% H₂, 3,1 Vol.-% N₂O, 17,6 Vol.-% N₂ und 5,9 Vol.-% H₂O.

### Vergleichsbeispiel 2V

Im Anschluss an die katalytische Reduzierung des Distickstoffmonoxids nach der in Beispiel 2 dargelegten Versuchsführung wurde ein Gemisch aus Distickstoffmonoxid und Stickstoffmonoxid in den Rohrreaktor eingeleitet, so dass die Gaszusammensetzung 74,1 Vol.-% Wasserstoff, 1,4 Vol.-% Distickstoffmonoxid, 0,9 Vol.-% Stickstoffmonoxid, 18,6 Vol.-% Stickstoff und 5 Vol.-% Wasser war.

Die nachfolgende Tabelle 2 gibt die Temperaturen der Bettmitte, bei der 50 % Umsatz an Distickstoffmonoxid beziehungsweise Stickstoffmonoxid erreicht wurden, wieder:

**Tabelle 2:**

| **Katalysator** | **T (50 % N₂O) [°C]** | **T (50 % NO) [°C]** |
|---|---|---|
| | | |
| Beispiel 2: 14 % Ag auf Al₂O₃ (ohne NO) | 69 | - |
| Beispiel 2V: 14 % Ag auf Al₂O₃ (mit NO) | 99 | 81 |

Die Tabelle zeigt, dass es nach dem erfindungsgemäßen Verfahren in einfacher Weise möglich ist, Stickstoffmonoxid aus dem Abgas einer Hydroxylaminsynthese in einem ersten Verfahrensschritt selektiv abzutrennen, wobei die weitere Aufarbeitung des Abgases zwecks Abtrennung des Distickstoffmonoxids in einer zweiten Trennstufe an sehr einfachen, unspezifischen Katalysatoren zur Reduzierung von Stickoxiden, und zwar an auf Aluminiumoxid geträgerten silberhaltigen Katalysatoren, möglich ist.

Laut Tabelle 2 wird für ein Gemisch aus NO und N₂O 50 % Umsatz für NO bereits bei einer Temperatur der Bettmitte von 81 °C erreicht, jedoch 50 % Umsatz für N₂O erst bei 99 °C.

Somit wäre der Einsatz dieser einfachen, unspezifischen Katalysatoren zur Aufarbeitung des Abgases aus der Hydroxylaminsynthese ohne die erfindungsgemäße Abtrennung von Stickstoffmonoxid in einer ersten Trennstufe nicht möglich, weil in diesem Fall Stickstoffmonoxid leichter, bei niedrigeren Betttemperaturen, reduziert wird, und daher für die Verwertung desselben aus dem Abgas der Hydroxylaminsynthese durch katalytische Reduzierung hochspezifische Katalysatoren für Distickstoffmonoxid erst entwickelt werden müssten.

## Patentansprüche

1. Verfahren zur Aufarbeitung des Abgases aus einer Anlage zur Herstellung von Hydroxylamin oder Hydroxylammonium-Salzen durch katalytische Reduktion von Stickstoffmonoxid mit Wasserstoff zwecks Verwertung zumindest eines Teils des im Abgas enthaltenen Stickstoffmonoxids und gegebenenfalls Wasserstoffs zur Herstellung von Hydroxylamin oder Hydrolxylammonium-Salzen, **dadurch gekennzeichnet, dass** aus dem Abgas der Anlage zur Herstellung von Hydroxylamin oder Hydroxylammonium-Salzen in einer ersten Trennstufe Stickstoffmonoxid selektiv abgetrennt wird und dass eine zweite Trennstufe vorgesehen ist, in der aus dem Restgas der ersten Trennstufe Distickstoffmonoxid abgetrennt wird.

2. Verfahren nach Anspruch 1, **dadurch gekennzeichnet, dass** die Verwertung zumindest eines Teils des im Abgas enthaltenen Stickstoffmonoxids und gegebenenfalls Wasserstoff zur Herstellung von Hydroxylamin oder Hydroxylammonium-Salzen durch Rezyklieren in die Anlage zur Herstellung von Hydroxylamin oder Hydroxylammonium-Salzen erfolgt.

3. Verfahren nach Anspruch 1 oder 2, **dadurch gekennzeichnet, dass** die selektive Abtrennung von Stickstoffmonoxid in der ersten Trennstufe durch selektive Absorption an einem geeigneten Absorbens durchgeführt wird.

4. Verfahren nach Anspruch 3, **dadurch gekennzeichnet, dass** das Absorbens ein Übergangsmetall-haltiges festes oder flüssiges Material ist, an das Stickstoffmonoxid reversibel als Nitrosylkomplex gebunden wird.

5. Verfahren nach Anspruch 4, **dadurch gekennzeichnet, dass** das Absorbens eine Eisen(II)sulfat-Lösung ist.

6. Verfahren nach Anspruch 1, **dadurch gekennzeichnet, dass** die selektive Abtrennung des Stickstoffmonoxids in einem Reaktor zur Herstellung von Hydroxylamin oder Hydroxylammonium-Salzen durch katalytische Reduktion von Stickstoffmonoxid mit Wasserstoff durchgeführt wird, der auf Vollumsatz des Stickstoffmonoxids ausgelegt ist.

7. Verfahren nach einem der Ansprüche 1 bis 6, **dadurch gekennzeichnet, dass** das Distickstoffmonoxid durch Druckwechselabsorption an einem festen oder flüssigen Absorbens selektiv abgetrennt wird.

8. Verfahren nach einem der Ansprüche 1 bis 6, **dadurch gekennzeichnet, dass** das Distickstoffmonoxid mittels eines geeigneten Membranverfahrens abgetrennt wird.

9. Verfahren nach einem der Ansprüche 1 bis 6, **dadurch gekennzeichnet, dass** das Distickstoffmonoxid durch Umsetzung zu Ammoniak an einem geeigneten Katalysator selektiv abgetrennt wird.

10. Verfahren nach Anspruch 9, **dadurch gekennzeichnet, dass** der durch Umsetzung von Distickstoffmonoxid erhaltene Ammoniak einem Ammoniakverbrennungsofen zur Herstellung von Stickstoffmonoxid zugeführt wird.

11. Verfahren nach einem der Ansprüche 1 bis 6, **dadurch gekennzeichnet, dass** das Distickstoffmonoxid durch Umsetzung mit Wasserstoff zu Stickstoff und Wasser entfernt wird.

12. Verfahren nach Anspruch 11, **dadurch gekennzeichnet, dass** die Umsetzung thermisch bei Temperaturen oberhalb von 500 °C erfolgt.

13. Verfahren nach Anspruch 11, **dadurch gekennzeichnet, dass** die Umsetzung katalytisch erfolgt.

14. Verfahren nach Anspruch 13, **dadurch gekennzeichnet, dass** die Umsetzung an Katalysatoren erfolgt, die als Aktivkomponenten eines oder mehrere der Metalle Silber, Palladium, Platin oder Kupfer oder eine oder mehrere Verbindungen eines oder mehrerer dieser Metalle enthält.

15. Verfahren nach einem der Ansprüche 1 bis 14, **gekennzeichnet durch** eine dritte Trennstufe, in der aus dem Abgas der zweiten Trennstufe Wasserstoff von Stickstoff und anderen im Verfahren zur Herstellung von Hydroxylamin oder Hydroxylammonium-Salzen inerten Komponenten abgetrennt abgetrennt wird.

16. Verfahren zur Herstellung von Hydroxylamin oder Hydroxylammonium-Salzen, **dadurch gekennzeichnet, dass** das Abgas nach einem Verfahren nach einem der Ansprüche 1 bis 15 aufbereitet wird.

17. Verfahren nach Anspruch 16, **dadurch gekennzeichnet, dass** mindestens einer der in der Aufbereitung des Abgases gewonnenen Wertstoffe Stickstoffmonoxid und Wasserstoff in die Anlage zur Herstellung von Hydroxylamin oder Hydroxylammonium-Salzen zurückgeführt wird.

## Claims

1. A process for reprocessing the exhaust gas from a plant for producing hydroxylamine or hydroxylammonium salts by catalytic reduction of nitrogen monoxide with hydrogen for the purpose of utilization of at least a part of the nitrogen monoxide and optionally hydrogen present in the exhaust gas for producing hydroxylamine or hydroxylammonium salts, which comprises, in a first separation stage, selectively separating off nitrogen monoxide from the exhaust gas of the plant for producing hydroxylamine or hydroxylammonium salts and in that a second separation stage is provided in which the dinitrogen monoxide is removed from the residual gas of the first separation stage.

2. The process according to claim 1, wherein the utilization of at least a part of the nitrogen monoxide and optionally hydrogen present in the exhaust gas for producing hydroxylamine or hydroxylammonium salts proceeds by recycling into the plant for producing hydroxylamine or hydroxylammonium salts.

3. The process according to claim 1 or 2, wherein the selective removal of nitrogen monoxide in the first separation stage is carried out by selective absorption to a suitable absorbent.

4. The process according to claim 3, wherein the absorbent is a transition metal-comprising solid or liquid material to which nitrogen monoxide is reversibly bound as nitrosyl complex.

5. The process according to claim 4, wherein the absorbent is an iron(II) sulfate solution.

6. The process according to claim 1, wherein the selective removal of nitrogen monoxide is carried out in a reactor for producing hydroxylamine or hydroxylammonium salts by catalytic reduction of nitrogen monoxide with hydrogen, which reactor is designed for complete conversion of the nitrogen monoxide.

7. The process according to one of claims 1 to 6, wherein the dinitrogen monoxide is selectively removed by pressure swing absorption to a solid or liquid absorbent.

8. The process according to one of claims 1 to 6, wherein the dinitrogen monoxide is removed by means of a suitable membrane process.

9. The process according to one of claims 1 to 6, wherein the dinitrogen monoxide is selectively removed by reaction to give ammonia in the presence of a suitable catalyst.

10. The process according to claim 9, wherein the ammonia obtained by reaction of dinitrogen monoxide is fed to an ammonia combustion furnace for producing nitrogen monoxide.

11. The process according to one of claims 1 to 6, wherein the dinitrogen monoxide is removed by reaction with hydrogen to form nitrogen and water.

12. The process according to claim 11, wherein the reaction proceeds thermally at temperatures above 500°C.

13. The process according to claim 11, wherein the reaction proceeds catalytically.

14. The process according to claim 13, wherein the reaction proceeds in the presence of catalysts which comprise as active components one or more of the metals silver, palladium, platinum or copper or one or more compounds of one or more of these metals.

15. The process according to one of claims 1 to 14, comprising a third separation stage in which, from the exhaust gas of the second separation stage, hydrogen is removed from nitrogen and other inert components in the process for producing hydroxylamine or hydroxylammonium salts.

16. A process for producing hydroxylamine or hydroxylammonium salts, which comprises reprocessing the exhaust gas by a process according to one of claims 1 to 15.

17. The process according to claim 16, wherein at least one of the valuable materials produced in the reprocessing of the exhaust gas nitrogen monoxide and hydrogen is recirculated into the plant for producing hydroxylamine or hydroxylammonium salts.

## Revendications

1. Procédé de traitement du gaz d'échappement d'une installation pour la fabrication d'hydroxylamine ou de sels d'hydroxylammonium par réduction catalytique de monoxyde d'azote avec de l'hydrogène dans le but de la valorisation d'au moins une partie du monoxyde d'azote et éventuellement de l'hydrogène contenus dans le gaz d'échappement pour la fabrication d'hydroxylamine ou de sels d'hydroxylammonium, **caractérisé en ce que** le monoxyde d'azote est séparé sélectivement du gaz d'échappement de l'installation pour la fabrication d'hydroxylamine ou de sels d'hydroxylammonium lors d'une première étape de séparation et **en ce qu'**une deuxième étape de séparation est prévue, lors de laquelle le monoxyde de diazote est séparé du gaz résiduel de la première étape de séparation.

2. Procédé selon la revendication 1, **caractérisé en ce que** la valorisation d'au moins une partie du monoxyde d'azote et éventuellement de l'hydrogène contenus dans le gaz d'échappement pour la fabrication d'hydroxylamine ou de sels d'hydroxylammonium a lieu par recyclage dans l'installation pour la fabrication d'hydroxylamine ou de sels d'hydroxylammonium.

3. Procédé selon la revendication 1 ou 2, **caractérisé en ce que** la séparation sélective du monoxyde d'azote lors de la première étape de séparation est réalisée par absorption sélective sur un absorbant approprié.

4. Procédé selon la revendication 3, **caractérisé en ce que** l'absorbant est un matériau solide ou liquide contenant un métal de transition, auquel le monoxyde d'azote est relié de manière réversible sous la forme d'un complexe de nitrosyle.

5. Procédé selon la revendication 4, **caractérisé en ce que** l'absorbant est une solution de sulfate de fer (II).

6. Procédé selon la revendication 1, **caractérisé en ce que** la séparation sélective du monoxyde d'azote est réalisée dans un réacteur pour la fabrication d'hydroxylamine ou de sels d'hydroxylammonium par réduction catalytique de monoxyde d'azote avec de l'hydrogène, qui est conçu pour une conversion totale du monoxyde d'azote.

7. Procédé selon l'une quelconque des revendications 1 à 6, **caractérisé en ce que** le monoxyde de diazote est séparé sélectivement par absorption modulée en pression sur un absorbant solide ou liquide.

8. Procédé selon l'une quelconque des revendications 1 à 6, **caractérisé en ce que** le monoxyde de diazote est séparé au moyen d'un procédé sur membrane approprié.

9. Procédé selon l'une quelconque des revendications 1 à 6, **caractérisé en ce que** le monoxyde de diazote est séparé sélectivement par transformation en ammoniac sur un catalyseur approprié.

10. Procédé selon la revendication 9, **caractérisé en ce que** l'ammoniac obtenu par transformation de monoxyde de diazote est introduit dans un four de combustion d'ammoniac pour la fabrication de monoxyde d'azote.

11. Procédé selon l'une quelconque des revendications 1 à 6, **caractérisé en ce que** le monoxyde de diazote est éliminé par mise en réaction avec de l'hydrogène pour former de l'azote et de l'eau.

12. Procédé selon la revendication 11, **caractérisé en ce que** la réaction a lieu thermiquement à des températures supérieures à 500 °C.

13. Procédé selon la revendication 11, **caractérisé en ce que** la réaction a lieu sous catalyse.

14. Procédé selon la revendication 13, **caractérisé en ce que** la réaction a lieu sur des catalyseurs qui contiennent en tant que composants actifs un ou plusieurs des métaux argent, palladium, platine ou cuivre ou un ou plusieurs composés d'un ou plusieurs de ces métaux.

15. Procédé selon l'une quelconque des revendications 1 à 14, **caractérisé par** une troisième étape de séparation, lors de laquelle l'hydrogène est séparé de l'azote et des autres composants inertes dans le procédé de fabrication d'hydroxylamine ou de sels d'hydroxylammonium dans le gaz d'échappement de la deuxième étape de séparation.

16. Procédé de fabrication d'hydroxylamine ou de sels d'hydroxylammonium, **caractérisé en ce que** le gaz d'échappement est traité par un procédé selon l'une quelconque des revendications 1 à 15.

17. Procédé selon la revendication 16, **caractérisé en ce qu'**au moins un des produits de valeurs monoxyde d'azote et hydrogène obtenus lors du traitement du gaz d'échappement est recyclé dans l'installation pour la fabrication d'hydroxylamine ou de sels d'hydroxylammonium.
